# EUROPEAN PATENT APPLICATION

(11) **EP 4 745 093 A1**
(43) Date of publication of application: **20.05.2026**
(21) Application number: 25213762.5
(22) Date of filing: 05.11.2025
(51) Int. Cl.: C02F 1/66, C02F 1/04, C02F 5/02, C02F 5/08, C02F 101/10, C02F 103/10

(54) **METHOD OF HYDROLYZING CALCIUM CHLORIDE BRINE**

(30) Priority: 12.11.2024 US 202418944466
(71) Applicant: Energy and Environmental Research Center Foundation, Grand Forks, ND 58202-9017 (US)
(72) Inventor: MARTIN, Christopher Lee, Grand Forks, 58201 (US); MUSICH, Mark, Grand Forks, 58202 (US)
(74) Representative: Forresters IP LLP

(57) **Abstract**

A method of hydrolyzing a calcium chloride brine includes forming ammonia gas including reacting NH₄Cl brine with Ca(OH)₂ to form NH₃ and the CaCl₂ brine. The method includes hydrolyzing the CaCl₂ brine including reacting the CaCl₂ brine formed during the forming of the ammonia gas with water to form HCl and Ca(OH)₂. The method also includes recycling at least some of the Ca(OH)₂ formed during the hydrolyzing of the CaCl₂ brine for use as at least part of the Ca(OH)₂ used in the forming of the ammonia gas.

## Description

### CROSS-REFERENCE TO RELATED APPLICATIONS

This application is a continuation-in-part of and claims the benefit of priority under 35 U.S.C. § 120 to U.S. Utility Application 18/522,842 filed November 29, 2023, which is a continuation-in-part of and claims the benefit of priority under 35 U.S.C. § 120 to U.S. Utility Application 18/515,726 filed November 21, 2023, which is a continuation of and claims the benefit of priority under 35 U.S.C. § 120 to U.S. Utility Application 18/170,392 filed February 16, 2023, which is a continuation-in-part of and claims the benefit of priority under 35 U.S.C. § 120 to U.S. Utility Application 17/651,520 filed February 17, 2022, which claims the benefit under 35 U.S.C. § 119(e) to U.S. Provisional Patent Application Serial No. 63/200,390 filed March 4, 2021, the disclosures of which are incorporated herein in their entirety by reference.

### BACKGROUND

Brine, a byproduct of various industrial processes such as oil and gas extraction, often contains high levels of dissolved solids, including sodium chloride (NaCl) and calcium chloride (CaCl₂). These brines can also include contaminants like heavy metals and organic compounds, posing environmental risks if not properly managed. Traditional treatment methods are costly and inefficient, often failing to recover valuable components from the brine.

Innovative approaches are needed to address these challenges, focusing on converting waste brine into useful products. By leveraging advanced chemical processes, it is possible to mitigate environmental impact while creating economic value. These methods aim to enhance efficiency and reduce waste, offering cost-effective alternatives to conventional brine treatment techniques.

Such approaches are particularly relevant in regions with significant brine production, such as those involved in oil and gas extraction, where the conversion of waste brine into valuable products can offset treatment costs and reduce disposal volumes.

### SUMMARY OF THE INVENTION

Various aspects of the present invention provide a method of hydrolyzing a calcium chloride brine. The method includes forming ammonia gas including reacting NH₄Cl brine with Ca(OH)₂ to form NH₃ and the CaCl₂ brine. The method includes hydrolyzing the CaCl₂ brine including reacting the CaCl₂ brine formed during the forming of the ammonia gas with water to form HCl and Ca(OH)₂. The method also includes recycling at least some of the Ca(OH)₂ formed during the hydrolyzing of the CaCl₂ brine for use as at least part of the Ca(OH)₂ used in the forming of the ammonia gas.

Various aspects of the present invention provide a method of hydrolyzing a calcium chloride brine. The method includes forming ammonia gas including reacting NH₄Cl brine with a mixture of Ca(OH)₂ and CaCl₂ to form NH₃ and the CaCl₂ brine. The method includes hydrolyzing the CaCl₂ brine including reacting the CaCl₂ brine formed during the forming of the ammonia gas with water to form HCl, Ca(OH)₂, and unhydrolyzed CaCl₂. The method also includes recycling at least some of the Ca(OH)₂ and the unhydrolyzed CaCl₂ formed during the hydrolyzing of the CaCl₂ brine for use as at least part of the Ca(OH)₂ used in the forming of the ammonia gas.

Various aspects of the present invention provides a method of hydrolyzing a calcium chloride brine. The method includes softening a brine composition, the softening including treating the brine composition with NaHCO₃ to form a softened brine composition and one or more softening precipitates, wherein the softened brine composition includes NaCl. The method includes absorbing CO₂ into the softened brine composition, the absorbing CO₂ including treating the NaCl in the softened brine composition with CO₂ gas and NH₃ to form a composition including NH₄Cl brine and to form NaHCO₃. The method includes recycling at least some of the NaHCO₃ formed during treating of the softened brine composition with CO₂ gas for use as at least part of the NaHCO₃ used in the softening. The method includes forming ammonia gas including reacting the NH₄Cl brine formed during the treating of the softened brine composition with CO₂ gas with Ca(OH)₂ to form the NH₃ and to form the CaCl₂ brine. The method includes hydrolyzing CaCl₂ including reacting the CaCl₂ brine formed during the forming of the ammonia gas with water to form HCl and Ca(OH)₂. The method also includes recycling at least some of the Ca(OH)₂ formed during the hydrolyzing of the CaCl₂ brine for use as at least part of the Ca(OH)₂ used in the forming of the ammonia gas.

Various aspects of the present invention have advantages over other methods of treating brine. For example, various aspects of the present method mitigate environmental risks by transforming brine, often considered a waste product, into useful chemicals, thereby reducing disposal needs. In various aspects of the present method, the HCl produced by the hydrolysis, or other materials produced by the method (e.g., CaCO₃, NaHCO₃, magnesium salts, lithium salts, or a combination thereof), are valuable products that can be used or sold to offset or recover the costs and time expense of performing the method and/or of performing other treatments to the brine. In various aspects, materials produced by the method such as CaCO₃, NaHCO₃, magnesium salts, lithium salts, or a combination thereof, can be used in oil and gas development and can be consumed locally near the brine source. In various aspects of the present method, the method can reduce the volume of brine that ultimately requires disposal. In various aspects of the present method, the method can leverage chemical processing economies of scale, potentially resulting in lower costs per unit volume as processing throughput increases.

As compared to electrochemical brine splitting which has a primary energy input of electricity, various aspects of the present method have a primary energy input of heat which can be generated at lower cost than electricity using natural gas produced on-site or in a nearby area; as such, various aspects of the present method can be performed with lower cost and greater efficiency than electrochemical brine splitting. Various aspects of the present method can be tolerant of a wide variety of impurities found in brines that could otherwise foul or inactivate membranes or electrocatalysts used in conventional methods of brine treatment. In various aspects of the present method, the thermochemical nature of the method can leverage chemical processing economies of scale to result in a lower cost per unit volume of brine treatment as processing throughput is increased, unlike electrochemical processes which scale linearly by increasing the two-dimensional surface area for selective membranes and electrodes rather than leveraging the exponential economies of scale possible with a reactor with higher volumetric flow capacity.

In various aspects of the present method, the method can convert chloride-dominant salts found in various brines to carbonate form via the absorption of CO₂ gas. This feature can allow recovery of HCl in excess of the amount that could be obtained solely via generation from salts that undergo hydrolysis (e.g., CaCl₂ and/or MgCl₂), by extending chloride to be provided by salts not known to readily undergo hydrolysis (e.g., NaCl). In various aspects, the resulting metal carbonates can be more valuable and/or more easily stored for disposal as compared to the starting chloride form. In various aspects, the CO₂ gas used to create the metal carbonates can represent avoided or negative emissions of CO₂ to the atmosphere, thereby providing beneficial greenhouse gas reduction. In various aspects, the CO₂ gas used to create the metal carbonates can include CO₂ produced during heat generation performed during the method.

In various aspects of the present method, the method can remove one or more valuable metals from the brine, such as lithium (e.g., in the form of lithium hydroxide, lithium carbonate, or lithium bicarbonate), magnesium, or rare-earth elements (REEs), in addition to forming the HCl. By generating other valuable products such as hydrohalic acid during the removal of the one or more valuable metals, in various aspects of the present invention, the cost and labor of extracting the low-concentration but potentially high value or importance metals can be at least partially offset, providing a more efficient method of extracting the one or more valuable metals from the brine than other methods.

Bringing water to the surface that is displaced during CO₂ sequestration can provide CO₂ plume management, increased storage potential within the boundaries of a given storage facility, or a combination thereof. In various aspects, the method of the present invention can offer additional advantages of bringing the water to the surface by providing the HCl acid produced by the hydrolysis as a product, or by providing other materials produced by method (e.g., CaCO₃, NaHCO₃, magnesium salts, lithium salts, or a combination thereof).

In various aspects, the present method enhances process efficiency by recycling unconverted materials such as unconverted CaCl₂ from the hydrolysis and forms ammonia gas including reacting NH₄Cl brine with a mixture of Ca(OH)₂ and unhydrolyzed CaCl₂ to form NH₃ and the CaCl₂ brine, increasing process efficiency and eliminating the need to a purification step.

### BRIEF DESCRIPTION OF THE FIGURES

The drawings illustrate generally, by way of example, but not by way of limitation, various embodiments of the present invention.
FIG. 1 illustrates a method of hydrolyzing a calcium chloride brine, in accordance with various aspects of the presently disclosed invention.
FIG. 2 illustrates a Solvay process for producing NaHCO₃ from NaCl brine.
FIG. 3 shows a hydrolysis reactor and supporting process scheme, in accordance with various aspects of the present invention.
FIG. 4 shows a scheme illustrating conversion of chloride-dominant salts to carbonate form with HCl formation, in accordance with various aspects of the present invention.
FIG. 5 illustrates desorbed NH₃ from an NH₄Cl solution after mixing with Ca(OH)₂ having various amounts of CaCl₂ therein, in accordance with various aspects of the present invention.

### DETAILED DESCRIPTION OF THE INVENTION

Reference will now be made in detail to certain aspects of the disclosed subject matter. While the disclosed subject matter will be described in conjunction with the enumerated claims, it will be understood that the exemplified subject matter is not intended to limit the claims to the disclosed subject matter.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" or "at least one of A or B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

In the methods described herein, the acts can be carried out in a specific order as recited herein. Alternatively, in any aspect(s) disclosed herein, specific acts may be carried out in any order without departing from the principles of the invention, except when a temporal or operational sequence is explicitly recited. Furthermore, specified acts can be carried out concurrently unless explicit claim language recites that they be carried out separately or the plain meaning of the claims would require it. For example, a claimed act of doing X and a claimed act of doing Y can be conducted simultaneously within a single operation, and the resulting process will fall within the literal scope of the claimed process.

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%. The term "substantially free of" as used herein can mean having none or having a trivial amount of, such that the amount of material present does not affect the material properties of the composition including the material, such that about 0 wt% to about 5 wt% of the composition is the material, or about 0 wt% to about 1 wt%, or about 5 wt% or less, or less than, equal to, or greater than about 4.5 wt%, 4, 3.5, 3, 2.5, 2, 1.5, 1, 0.9, 0.8, 0.7, 0.6, 0.5, 0.4, 0.3, 0.2, 0.1, 0.01, or about 0.001 wt% or less, or about 0 wt%.

### Method of hydrolyzing a calcium chloride brine.

The present invention provides a method of hydrolyzing a calcium chloride brine. The method can include forming ammonia gas including reacting NH₄Cl brine with Ca(OH)₂ to form NH₃ and the CaCl₂ brine. The method can include hydrolyzing the CaCl₂ brine including reacting the CaCl₂ brine formed during the forming of the ammonia gas with water to form HCl and Ca(OH)₂. The method can also include recycling at least some of the Ca(OH)₂ formed during the hydrolyzing of the CaCl₂ brine for use as at least part of the Ca(OH)₂ used in the forming of the ammonia gas. The method can further include recovering the HCl formed from the hydrolyzing of the CaCl₂ brine as a product.

The forming of the ammonia gas including reacting the NH₄Cl brine with Ca(OH)₂ to form NH₃ and the CaCl₂ brine can be performed under any suitable conditions. For example, the forming of ammonia gas can include maintaining a temperature of room temperature to 200 °C, or 50 °C to 150 °C, or less than or equal to 200 °C and greater than or equal to 20 °C and less than, equal to, or greater than 25 °C, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, or 195 °C. The forming of ammonia gas can include maintaining a pressure of 0.05 MPa to 10 MPa, or 0.1 MPa to 5 MPa, or less than or equal to 10 MPa and greater than or equal to 0.05 MPa and less than, equal to, or greater than 0.1 MPa, 0.2, 0.4, 0.6, 0.8, 1, 1.5, 2, 2.5, 3, 3.5, 4, 4.5, 5, 6, 7, 8, or 9 MPa. The forming of ammonia gas can be performed continuously or can be performed for a duration of less than or equal to 5 hours and greater than or equal to 0.1 second and less than, equal to, or greater than 0.5 seconds, 1, 2, 5, 10, 15, 20, 25, 30, 35, 40, 45, 50, 55 seconds, 1 minute, 2, 3, 4, 5, 6, 8, 10, 15, 20, 25, 30, 35, 40, 45, 50, 55 minutes, 1 hour, 2, 3, or 4 hours.

The method can include recycling at least some of the Ca(OH)₂ formed during the hydrolyzing of the CaCl₂ brine for use as at least part of the Ca(OH)₂ used in the forming of the ammonia gas. In various aspects of the present method, 0.01 wt% to 100 wt% of the Ca(OH)₂ formed during the hydrolyzing of the CaCl₂ brine can be recycled, or 80 wt% to 100 wt% of the Ca(OH)₂ formed is recycled, or less than or equal to 100 wt% and greater than or equal to 0.01 wt% and less than, equal to, or greater than 0.05 wt%, 0.1, 0.5, 1, 2, 3, 4, 5, 6, 8, 10, 12, 14, 16, 18, 20, 25, 30, 35, 40, 45, 50, 55, 60, 65, 70, 75, 80, 82, 84, 86, 88, 90, 91, 92, 93, 94, 95, 96, 97, 98, 99, 99.5, or 99.5 wt%. In various aspects of the present method, 0.01 wt% to 100 wt% of the Ca(OH)₂ used in the formation of the ammonia can be recycled Ca(OH)₂, or 80 wt% to 100 wt% of the Ca(OH)₂ used in the formation of the ammonia is recycled Ca(OH)₂, or less than or equal to 100 wt% and greater than or equal to 0.01 wt% and less than, equal to, or greater than 0.05 wt%, 0.1, 0.5, 1, 2, 3, 4, 5, 6, 8, 10, 12, 14, 16, 18, 20, 25, 30, 35, 40, 45, 50, 55, 60, 65, 70, 75, 80, 82, 84, 86, 88, 90, 91, 92, 93, 94, 95, 96, 97, 98, 99, 99.5, or 99.5 wt%.

The recycling of the Ca(OH)₂ formed during the hydrolyzing of the CaCl₂ brine for use as at least part of the Ca(OH)₂ used in the forming of the ammonia gas can include flowing a recycle stream including the Ca(OH)₂ from the hydrolysis of the CaCl₂ to the formation of the ammonia gas. The method can further include at least partially purging materials from the recycle stream prior to flowing the recycle stream to the formation of the ammonia gas. The materials purged from the recycle stream can include any suitable materials that accumulate in the system. In some aspects, the materials purged from the recycle stream can include one or more Mg salts, one or more Li salts, or a combination thereof. The materials purged from the recycle stream can include LiCl and/or MgO, and optionally further include Ca(OH)₂ and/or CaCl₂. The purging can be performed in any suitable way. The purging can include separating a purge stream from the recycle stream. The method can include separating water-soluble compounds in the purge stream including Ca(OH)₂ and MgO from water insoluble compounds in the purge stream including LiCl and optionally further including CaCl₂. The water insoluble compounds can include CaCl₂. The method can include separating the CaCl₂ and the LiCl from one another. The method can include adding the separated CaCl₂ back to the recycle stream. The method can include separating the Ca(OH)₂ and the MgO from one another. The method can include adding the separated Ca(OH)₂ back to the recycle stream. In some aspects, some or all of the separated CaCl₂ and/or Ca(OH)₂ is not returned to the recycle stream and is instead isolated as a product of the method.

In various aspects, the method includes purging one or more materials from the CaCl₂ brine prior to the hydrolysis of the CaCl₂ brine. The materials purged from the CaCl₂ brine can include any suitable materials that accumulate in the system. In some aspects, the one or more materials include one or more Mg salts, one or more Li salts, or a combination thereof. The materials purged from the CaCl₂ brine can include LiCl and/or MgO, and optionally further include Ca(OH)₂ and/or CaCl₂. The purging can be performed in any suitable way. The purging can include separating a purge stream from the CaCl₂ brine, and separating water-soluble compounds in the purge stream including MgO and optionally further including Ca(OH)₂ from water insoluble compounds in the purge stream including LiCl and CaCl₂. The water soluble compounds can include Ca(OH)₂. The method can include adding the separated Ca(OH)₂ back to the CaCl₂ brine. The method can include separating the Ca(OH)₂ and the MgO from one another. The water insoluble compounds can include CaCl₂. The method can include separating the CaCl₂ and the LiCl from one another. The method can include adding the separated CaCl₂ back to the CaCl₂ brine. In some aspects, some or all of the separated CaCl₂ and/or Ca(OH)₂ is not returned to the CaCl₂ brine and is instead isolated as a product of the method.

Hydrolyzing the CaCl₂ brine includes reacting the CaCl₂ brine formed during the forming of the ammonia gas with water to form HCl and Ca(OH)₂. In various aspects, the hydrolysis of the CaCl₂ brine is performed to completion such that there is substantially no remaining CaCl₂. In various aspects, the hydrolysis of the CaCl₂ brine is not performed to completion, wherein the unreacted CaCl₂ product is CaCl₂ starting material for the hydrolysis. The products of the hydrolysis of the CaCl₂ brine can include the HCl, the Ca(OH)₂, and unreacted CaCl₂. The products of the hydrolysis of the CaCl₂ brine can have a ratio of Ca(OH)₂ to CaCl₂ of 1:1000 to 1:0, or a ratio of Ca(OH)₂ to CaCl₂ of 1:20 to 1000:1, or 1000:1 to 0.1:1, or 1:1 to 1000:1, or less than or equal to 1:0 and greater than or equal to 1:1000 or less than, equal to, or greater than 1:750, 1:500, 1:400, 1:300, 1:200, 1:100, 1:80, 1:60, 1:40, 1:20, 1:15, 1:10, 1:9, 1:8, 1:7, 1:6, 1:5, 1:4, 1:3, 1:2, 1:1, 0.8:1, 0.6:1, 0.5:1, 0.4:1, 0.3:1, 0.2:1, 0.1:1, 2:1, 3:1, 4:1, 5:1, 6:1, 7:1, 8:1, 9:1, 10:1, 15:1, 20:1, 40:1, 60:1, 80:1, 100:1, 200:1, 300:1, 400:1, 500:1, or 750:1. The recycling of the Ca(OH)₂ formed during the hydrolyzing of the CaCl₂ brine can include recycling a mixture of the Ca(OH)₂ formed during the hydrolyzing of the CaCl₂ brine and the unhydrolyzed CaCl₂ from the hydrolysis of the CaCl₂ brine. Reacting the NH₄Cl brine with Ca(OH)₂ can include reacting the NH₄Cl brine with a mixture of the Ca(OH)₂ formed during the hydrolyzing of the CaCl₂ brine and the unhydrolyzed CaCl₂ from the hydrolysis of the CaCl₂ brine.

The method can further include at least partially evaporating water from the CaCl₂ brine prior to the hydrolysis of the CaCl₂ brine. The at least partial evaporation of water can include maintaining a temperature of the CaCl₂ brine of 100 °C to 300 °C, or 125 °C to 200 °C, or less than or equal to 300 °C and greater than or equal to 100 °C and less than, equal to, or greater than 105 °C, 110, 115, 120, 125, 130, 135, 140, 145, 150, 155, 160, 165, 170, 175, 180, 185, 190, 195, 200, 205, 210, 215, 220, 225, 230, 235, 240, 245, 250, 255, 260, 265, 270, 275, 280, 285, 290, or 295 °C. The at least partial evaporation of water can include maintaining a pressure of the CaCl₂ brine of 0.001 MPa to 1 MPa, or 0.01 MPa to 0.2 MPa, or less than or equal to 1 MPa and greater than or equal to 0.001 MPa and less than, equal to, or greater than 0.005 MPa, 0.01 MPa, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.25, 0.3, 0.35, 0.4, 0.45, 0.5, 0.55, 0.6, 0.65, 0.7, 0.75, 0.8, 0.85, 0.9, or 0.95 MPa. The method can include recycling at least some of the evaporated water for use as at least some of the water used during the hydrolyzing of the CaCl₂ brine. In some aspects, substantially none of the evaporated water is recycled. In some aspects, 1 wt% to 100 wt% of the evaporated water is recycled, or 80 wt% to 100 wt% of the evaporated water is recycled, or less than or equal to 100 wt% and greater than or equal to 1 wt% and less than, equal to, or greater than 2 wt%, 3, 4, 5, 6, 8, 10, 12, 14, 16, 18, 20, 25, 30, 35, 40, 45, 50, 55, 60, 65, 70, 75, 80, 82, 84, 86, 88, 90, 91, 92, 93, 94, 95, 96, 97, 98, 99, 99.5, or 99.5 wt% is recycled.

The method can further include softening a brine composition. The softening can include treating the brine composition with NaHCO₃ to form a softened brine composition and one or more softening precipitates. The softened brine composition can include NaCl. The method can further include absorbing CO₂ into the softened brine composition, the absorbing CO₂ including treating the softened brine composition with CO₂ gas and the NH₃ to form a composition including the NH₄Cl brine and NaHCO₃. The NaHCO₃ can be a solid (e.g., a precipitate), and the method can include separating the solid NaHCO₃ from the NH₄Cl brine. The CO₂ can be provided by any suitable source. In various aspects, the CO₂ gas is derived from combustion. The NH₄Cl brine produced by the absorbing of CO₂ is the NH₄Cl brine used in the forming of ammonia gas including reacting the NH₄Cl brine with Ca(OH)₂ to form NH₃ and the CaCl₂ brine.

The brine composition can include any suitable brine composition. The brine composition includes NaCl. The brine composition can further include CaCl₂. The brine composition can include a larger proportion of NaCl than CaCl₂. The brine composition can include produced water from petroleum extraction, produced water from CO₂ sequestration, water produced from an industrial process, a concentrate thereof, a brine formed from reaction of a hydroxide salt with an ammonium chloride salt wherein the ammonium chloride salt is formed by reaction of a starting material brine with CO₂ and ammonia, or a combination thereof. The method can further include concentrating a starting material brine to form the brine composition. The starting material brine can include produced water from petroleum extraction, produced water from CO₂ sequestration, water produced from an industrial process, or a combination thereof. The concentrating can include evaporating, wherein performing the evaporating includes using thermal treatment, distillation, an evaporator, a rotary evaporator, a jacketed tank evaporator, a natural or forced recirculation evaporator, a falling film evaporator, a rising film evaporator, a climbing and falling-film plate evaporator, a vacuum evaporator, or a combination thereof.

The brine composition can include a chloride salt of beryllium, magnesium, calcium, strontium, barium, radium, lithium, sodium, potassium, rubidium, cesium, francium, a rare-earth element (REE) (e.g., La, Ce, Pr, Nd, Pm, Sm, Eu, Gd, Tb, Dy, Ho, Er, Tm, Yb, Lu, yttrium, or scandium), or any combination thereof. The brine composition can include beryllium chloride, magnesium chloride, calcium chloride, strontium chloride, barium chloride, radium chloride, lithium chloride, sodium chloride, potassium chloride, rubidium chloride, cesium chloride, francium chloride, or a combination thereof. The brine composition can include calcium chloride, sodium chloride, magnesium chloride, lithium chloride, a chloride salt of a rare-earth element (REE), or a combination thereof. The brine composition can include a total amount of metal chloride salts therein of 1 wt% to 50 wt%, 1 wt% to 80 wt%, or less than or equal to 80 wt% and greater than or equal to 1 wt% and less than, equal to, or greater than 2 wt%, 3, 4, 5, 6, 8, 10, 15, 20, 25, 30, 35, 40, 45, 50, 55, 60, 65, 70, or 75 wt%. The brine composition can be 50 wt% to 99 wt% water, or 20 wt% to 99 wt% water, or less than or equal to 99 wt% and greater than or equal to 20 wt% and less than, equal to, or greater than 25 wt%, 30, 35, 40, 45, 50, 55, 60, 65, 70, 75, 80, 82, 84, 86, 88, 90, 91, 92, 93, 94, 95, 96, 97, or 98 wt% water. The brine composition can have a molar ratio of sodium chloride salt to calcium chloride salt of 1:100 to 1000:1, or 1:1 to 1000:1, or less than or equal to 1000:1 and greater than or equal to 1:100 and less than, equal to, or greater than 1:750, 1:500, 1:400, 1:300, 1:200, 1:100, 1:90, 1:80, 1:70, 1:60, 1:50, 1:40, 1:30, 1:20, 1:10, 1:9, 1:8, 1:7, 1:6, 1:5, 1:4, 1:3, 1:2, 1:1, 2:1, 3:1, 4:1, 5:1, 6:1, 7:1, 8:1, 9:1, 10:1, 15:1, 20:1, 30:1, 40:1, 50:1, 60:1, 70:1, 80:1, or 90:1.

The softening of the brine composition can be performed using any suitable conditions. The softening of the brine composition can include maintaining a temperature of the brine composition of 10 °C to 150 °C, or 20 °C to 60 °C, or less than or equal to 150 °C and greater than or equal to 10 °C and less than, equal to, or greater than 15 °C, 20, 25, 30, 35, 40, 45, 50, 55, 60, 65, 70, 75, 80, 85, 90, 95, 100, 105, 110, 115, 120, 125, 130, 135, 140, or 145 °C. The softening of the brine composition can include maintaining a pressure of the brine composition of 0.1 MPa to 0.5 MPa, or 0.1 MPa to 0.2 MPa, or less than or equal to 0.5 MPa and greater than or equal to 0.1 MPa and less than, equal to, or greater than 0.15 MPa, 0.2, 0.25, 0.3, 0.35, 0.4, or 0.45 MPa. The softening of the brine composition remove some of all CaCl₂ and/or other salts from the brine composition (e.g., strontium chloride, barium chloride, or a combination thereof), to form the softened brine composition including NaCl.

The absorbing of the CO₂ with the softened brine composition can be performed using any suitable conditions. The absorbing of the CO₂ with the softened brine composition can include maintaining a temperature of the softened brine composition at 10 °C to 1000 °C, or 20 °C to 700 °C, or 20 °C to 650 °C, or 450 °C to 550 °C, or less than or equal to 1000 °C and greater than or equal to 10 °C and less than, equal to, or greater than 15 °C, 20, 25, 30, 40, 50, 60, 80, 100, 120, 140, 160, 180, 200, 220, 240, 250, 260, 280, 300, 320, 340, 360, 380, 400, 420, 440, 450, 460, 470, 480, 490, 500, 510, 520, 530, 540, 550, 560, 580, 600, 620, 640, 660, 680, 700, 750, 800, 850, 900, or 950 °C. The absorbing CO₂ into the softened brine composition can include maintaining a pressure of the softened brine composition of 0.01 MPa to 100 MPa, or 0.05 MPa to 10 MPa, or 0.1 MPa to 0.5 MPa, or less than or equal to 100 MPa and greater than or equal to 0.01 MPa and less than, equal to, or greater than 0.05 MPa, 0.1, 0.15, 0.2, 0.25, 0.3, 0.35, 0.4, 0.45, 0.5, 0.6, 0.8, 1, 1.5, 2, 3, 4, 5, 6, 8, 10, 12, 14, 16, 18, 20, 25, 30, 35, 40, 45, 50, 55, 60, 65, 70, 75, 80, 85, 90, or 95 MPa. The method can include performing the absorbing CO₂ into the softened brine composition continuously or for a duration of 0.1 second to 5 h, or 1 second to 1 h, or less than or equal to 5 hours and greater than or equal to 0.1 second and less than, equal to, or greater than 0.5 seconds, 1, 2, 5, 10, 15, 20, 25, 30, 35, 40, 45, 50, 55 seconds, 1 minute, 2, 3, 4, 5, 6, 8, 10, 15, 20, 25, 30, 35, 40, 45, 50, 55 minutes, 1 hour, 2, 3, or 4 hours.

The one or more softening precipitates can include a metal carbonate. The one or more softening precipitates can include CaCO₃. The one or more softening precipitates can include BaCO₃, SrCO₃, or a combination thereof. The method can include separating the one or more softening precipitates from the softened brine composition. The method can include recovering the one or more softening precipitates as a product.

The method can further include recycling at least some of the NaHCO₃ formed during the CO₂ absorption for use as at least part of the NaHCO₃ used in the softening. In various aspects, at least some of the NaHCO₃ formed during the treating of the softened brine composition with the CO₂ gas is not recycled to the softening. The method can further include recovering at least some of the NaHCO₃ formed during the treating of the softened brine composition with the CO₂ gas as a product. In various aspects, 0.01 wt% to 100 wt% of the NaHCO₃ formed during the CO₂ absorption is recycled, or 80 wt% to 100 wt% of the NaHCO₃ formed during the CO₂ absorption is recycled, or less than or equal to 100 wt% and greater than or equal to 0.01 wt% or less than, equal to, or greater than 0.05 wt%, 0.1, 0.5, 1, 2, 3, 4, 5, 6, 8, 10, 12, 14, 16, 18, 20, 25, 30, 35, 40, 45, 50, 55, 60, 65, 70, 75, 80, 82, 84, 86, 88, 90, 91, 92, 93, 94, 95, 96, 97, 98, 99, 99.5, or 99.9 wt%. In various aspects, 0.01 wt% to 100 wt% of the NaHCO₃ used in the softening is recycled, or 80 wt% to 100 wt% of the NaHCO₃ used in the softening is recycled, or less than or equal to 100 wt% and greater than or equal to 0.01 wt% or less than, equal to, or greater than 0.05 wt%, 0.1, 0.5, 1, 2, 3, 4, 5, 6, 8, 10, 12, 14, 16, 18, 20, 25, 30, 35, 40, 45, 50, 55, 60, 65, 70, 75, 80, 82, 84, 86, 88, 90, 91, 92, 93, 94, 95, 96, 97, 98, 99, 99.5, or 99.9 wt%.

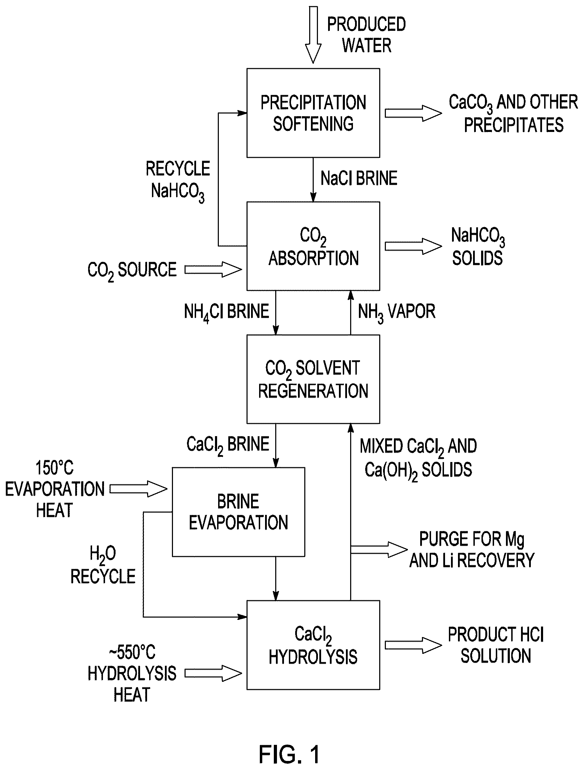

FIG. 1 illustrates a method of hydrolyzing a calcium chloride brine, in accordance with various aspects of the presently disclosed invention. The method includes softening the brine composition, the softening including treating the brine composition with NaHCO₃ to form a softened brine composition and one or more softening precipitates, wherein the softened brine composition includes NaCl. The method includes absorbing CO₂ into the softened brine composition, the absorbing of CO₂ including treating the NaCl in the softened brine composition with CO₂ gas and NH₃ to form a composition including NH₄Cl brine and to form NaHCO₃. The method includes recycling at least some of the NaHCO₃ formed during treating of the softened brine composition with CO₂ gas for use as at least part of the NaHCO₃ used in the softening. The method includes forming ammonia gas including reacting the NH₄Cl brine formed during the treating of the softened brine composition with CO₂ gas with Ca(OH)₂ to form the NH₃ and to form the CaCl₂ brine. The method includes hydrolyzing CaCl₂ including reacting the CaCl₂ brine formed during the forming of the ammonia gas with water to form HCl and Ca(OH)₂. The method also includes recycling at least some of the Ca(OH)₂ formed during the hydrolyzing of the CaCl₂ brine for use as at least part of the Ca(OH)₂ used in the forming of the ammonia gas.

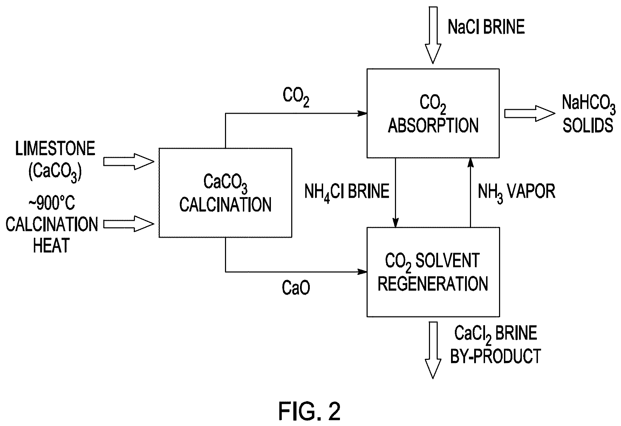

The brine-processing scheme shown in FIG. 1 is based on exchanging a carbonate ion from CO₂ capture for native brine chloride to create primary product streams of sodium bicarbonate (NaHCO₃) and hydrochloric acid (HCl), the latter of which is produced in a closed loop of calcium chloride (CaCl₂) hydrolysis. Chloride is transferred from NaCl to CaCl₂ using a closed-loop flow of ammonia (NH₃) and ammonium chloride (NH₄Cl) as performed in the Solvay process (FIG. 2). The Solvay process is an industrial process that is used worldwide to produce NaHCO₃ and Na₂CO₃ products from NaCl and limestone (i.e., CaCO₃) inputs. In the Solvay process, CaCl₂ brine is a by-product that is either sold or, if the market is saturated, disposed of as waste.

Differences between the hydrolysis treatment of produced water in FIG. 1 and the Solvay process in FIG. 2 include that the limestone feed in the Solvay process is eliminated and HCl solution is created as a coproduct. To achieve these changes, the CO₂ originally derived from limestone calcination in the Solvay process is replaced with an external source of CO₂, which is absorbed by the ammoniated brine in the present invention. The CO₂ source stream is hypothesized to be combustion flue gases produced from generating the thermal energy needed for the hydrolysis reaction. Additionally, in the method of the present disclosure, instead of being a by-product as in the Solvay process, the CaCl₂ brine produced during CO₂ solvent (i.e., NH₃) regeneration is hydrolyzed to form a CaCl₂ and Ca(OH)₂ mixture and HCl. The Ca(OH)₂ mixture component is functionally equivalent to the CaO used in the Solvay process, while the HCl can be recovered and sold. The Solvay process commonly includes an additional conversion step (calcination at 300 °C) to convert NaHCO₃ to Na₂CO₃; this step can be added to the presently disclosed method in various aspects.

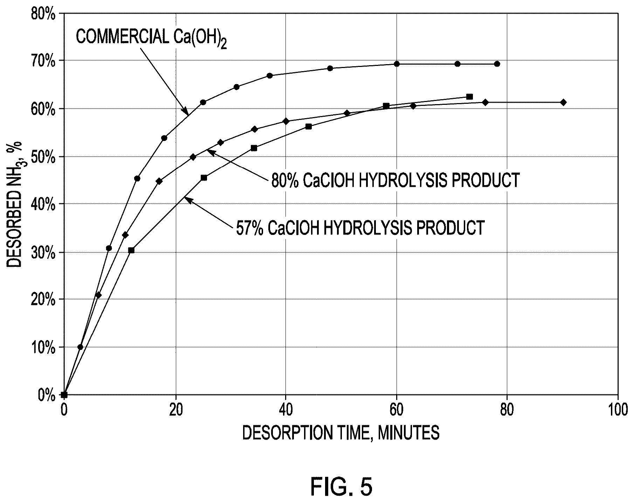

The hydrolysis step of FIG. 1 is part of an internal recycle loop for CaCl₂, meaning that unconverted CaCl₂ will be returned to the hydrolysis reactor after regeneration of the NH₃ stream. This is a significant feature of the process since CaCl₂ hydrolysis produces a mixture of incompletely converted CaCl₂ that approaches the molar composition of CaClOH. Therefore, since any unconverted CaCl₂ will be recycled, a purification step to separate Ca(OH)₂ can be omitted. The effectiveness of using mixed CaCl₂ hydrolysis products for regenerating NH₃ is shown in the test results of FIG. 5, which compares two samples of hydrolysis products, each characterized by their CaClOH content, alongside commercial Ca(OH)₂. These tests simulated the CO₂ solvent regeneration step in FIG. 1, where mixed hydrolysis products are reacted with NH₄Cl solution to produce NH₃ gas that is desorbed from solution. Results show that the unpurified hydrolysis products were approximately 85% as effective as commercial Ca(OH)₂ at desorbing NH₃.

Potentially valuable species such as Mg and Li in the process of FIG. 1 are expected to pass through the precipitation softening step and accumulate in the hydrolysis loop, where they can be selectively recovered. Measured precipitation softening characteristics with Na₂CO₃ show that the majority of Mg and Li in a sample of oil and gas produced water were not effectively removed by either precipitation softening or carbonation. These species pass through to later stages of processing where they could be purged in a more concentrated form.

The proposed process differs from the hydrolysis-modified Solvay process in that CaCl₂ is the primary hydrolysis target as opposed to MgCl₂, and the methods for effective CaCl₂ hydrolysis have been found to be different than those for MgCl₂. Furthermore, the hydrolysis-modified Solvay process does not envision the treatment of mixed composition brines such as those found in oil and gas produced waters.

In various aspects, the method of the present invention can be used to process geologic brines brought to the surface as a coproduct of primary activities including oil and gas production and CO₂ storage. Often this brine is considered a waste product, and converting it into useful chemicals can reduce the volume of brine needing disposal, while the value generated from the chemical products can offset the cost of treating the brine. Brine hydrolysis is a thermal process that offers operating cost advantages over electrochemical-based processes, which can also produce chemicals from brine, since brine hydrolysis can use relatively lower-cost coproduced natural gas as its primary energy source versus electricity.

The primary product streams from brine hydrolysis include sodium carbonate compounds, such as NaHCO₃ and Na₂CO₃ and HCl solution, both of which could be useful in oil and gas development and might be consumed locally near the source of the brine. Sodium carbonate compounds might have value as a precipitation-softening reagent for recycling produced water, e.g., in hydraulic fracturing. Softening reduces the scaling potential of produced water and simplifies the water chemistry to make it possible to blend consistent composition brine for reuse. Likewise, HCl is commonly used for scale control during oil and gas production and workover activities of producing wells.

### Examples

Various aspects of the present invention can be better understood by reference to the following Examples which are offered by way of illustration. The present invention is not limited to the Examples given herein.

In the Examples herein, each hydrolyzed sample is characterized via online measurement of HCl release using a Fourier transform infrared (FTIR) gas analyzer and posttest analysis of recovered samples including the condensed HCl, hydrolyzed liquid, and precipitated solids. Titration analysis and thermogravimetric analysis (TGA) can be used to characterize the hydrolysis product as well.

### Example 1. Hydrolysis of salt mixtures of CaCl₂ and NaCl salt mixtures.

Simulated mixtures of NaCl and CaCl₂ are hydrolyzed to parametrically study the hydrolysis of mixed salts. Although using only these two salts is a simplification of the composition of produced water, NaCl and CaCl₂ represent the bulk constituents of Bakken produced water and will drive the overall economics of the process. The mixtures of salts tested include idealized simulated mixtures of NaCl and CaCl₂ over the range spanning 100% NaCl to 100% CaCl₂. The mixture of NaCl and CaCl₂ is added to a high purity alumina liquid phase reactor with a heater, and steam is added to the reactor as the reactor is heated. The resulting hydrolyzed product is removed and analyzed. Key testing objectives are to identify blended salt mixtures that are beneficial for hydrolysis in terms of increasing the rate of reaction or reducing the operating temperature. The results will provide a simplified, but continuous, set of hydrolysis conversion data to identify preferred operating conditions and provide context for interpreting results with produced water.

Preliminary results identified a preferrable range of Na:Ca chloride salt composition for liquid phase hydrolysis to occur: between a Na:Ca molar ratio of 0:1 (i.e., CaCl₂ only) up to an equimolar ratio of the salts having a Na:Ca molar ratio of 1:1. At molar ratios of Na:Ca greater than 1, melting of the reactants was impeded at 550 °C which prevented the use of the reactor. Based on qualitative observations during the testing, the addition of NaCl to the salt mixture appeared to speed melting and reduce the viscosity of the liquid reactants. Hypothetically, the use of the preferrable range of Na:Ca chloride salt ratios, and the addition of NaCl to the salt mixture, or a combination thereof, may facilitate reactor mixture and overall mass transfer to improve the hydrolysis reaction rate, which will be revealed by further studies. Even if the presence of NaCl does not enhance the hydrolysis rate of CaCl₂, Na addition to improve liquid phase behavior is a significant result in itself as it may lead to more efficient reactor design and operation. For example, it appears that a NaCl-CaCl₂ eutectic that is formed within the preferrable Na:Ca molar range may present a lower risk of solidification resulting from slight reductions in temperature; as such the hydrolysis reactor could hypothetically be operated at a lower temperature to maximize thermal efficiency.

### Example 2. Hydrolysis of produced water and hydrolysis product characterization.

Testing with more complicated salt mixtures taken from real produced water is conducted with a focus on determining the fate of a wider suite of relevant elements. The resulting products from brine hydrolysis are characterized to determine potential uses for them and their value. The tested samples begins with the as-sampled brine composition and proceed to increasing Ca:Na levels by partially evaporating the produced water, which results in a preferential precipitation of NaCl over CaCl₂ to increase the Ca:Na salt ratio. Sampling and analysis are identical to Example 1 except that the posttest samples are analyzed for an expanded suite of elements beyond Cl, Ca, and Na to include key additional elements found in produced water such as Br, Li, K, Mg, Sr, and Ba.

The findings are used to develop a preliminary process flow diagram showing the fractionation of produced water into potentially salable products and any remaining disposal streams. This diagram can provide a basis of a techno-economic analysis to evaluate profitability and scalability of the concept relative to the typical production rates and gathering capacities found in the Bakken.

### Example 3. Large scale hydrolysis of water.

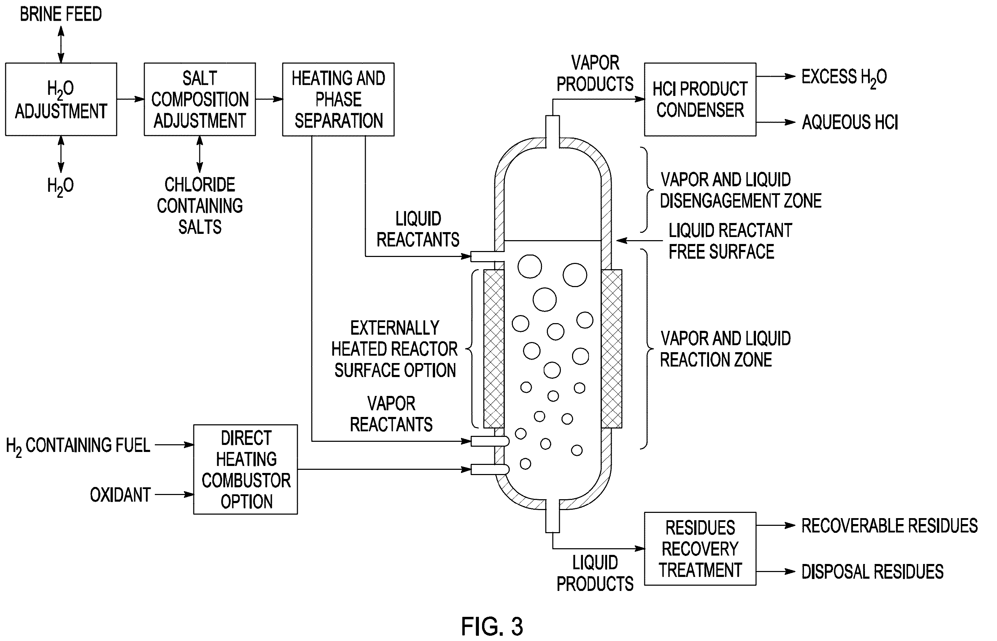

FIG. 3 shows a hydrolysis reactor and supporting process scheme, in accordance with various aspects. The hydrolysis reactor design exposes the reacting salts, preferably in liquid form, to a stream of superheated steam or a steam-containing gas mixture. Two-phase operation is useful because HCl vaporizes under hydrolysis conditions and its separation is made possible by transferring it from the liquid phase to the vapor phase. A vapor-solid hydrolysis reactor is also possible, but vapor-liquid is preferred for the hydrolysis of CaCl₂-containing mixtures to maximize mass transfer since this salt will soften and fuse under hydrolysis conditions, and thereby degrade any porous structure which hinders complete reaction of the salt.

The reactor includes three mass exchange ports: 1) feed port for reactants (e.g., a brine composed of H₂O and one or more chloride salts); 2) vapor exhaust port for unreacted gases and vaporized HCl product; and 3) liquid exhaust port for hydrolyzed salt mixture that contains some fraction of recoverable hydroxide compounds, including Ca(OH)₂.

Given the phase change behavior of the reactants, it can be desirable to provide two feed ports for the reactants as shown in FIG. 3: one for the steam-containing vapor and one for the chloride salts fed in either solid or liquid form. Alternatively, a single, common feed port can instead be employed, with a reactor design that accommodates the phase segregation that will occur as the reactant stream is heated to hydrolysis conditions. For example, in a single common feed port design, the non-volatile salt reactants can be conveyed into the reaction zone during heating, as most of the water portion of the reactants will vaporize leaving the non-volatile constituents behind; non-volatile conveyance may be through mechanical means or by ensuring they are heated sufficiently that they liquefy and flow to the desired reaction zone.

The reaction zone within the hydrolysis reactor of FIG. 3 provides thorough contact between the vapor and liquid reactants while supplying the thermal energy required for hydrolysis to occur. The reactor shown in FIG. 3 injects vapor bubbles at a depth below the liquid reactant free surface such that the hydrolysis reaction is achieved during the buoyancy-driven rise time of the bubbles. This buoyancy-driven flow can be used to entrain the liquid to create co-current contact between the reactants, or the liquid reactants can be actively circulated against the buoyancy flow to create a countercurrent contact with the rising vapor.

As shown in FIG. 3, thermal energy for hydrolysis may be provided by the direct combustion of a hydrogen-containing fuel w such that the thermal energy is generated by combustion of the fuel and at least a portion of the H₂O needed for hydrolysis is generated during combustion. Alternatively, thermal energy transfer can be achieved by leveraging any suitable method of reactant circulation to flow the reactants past heated reactor surfaces where thermal energy is transferred by conduction through the reactor wall; the source of heat could come from any known method.

The scheme of FIG. 3 shows process steps for converting a chloride brine to useful chemical products. The process can be summarized by the following steps. If necessary, water content of the brine stream is adjusted (e.g., via evaporation) to reach the preferred range for hydrolysis reactor operation; this process occurs in the H₂O Adjustment block in FIG. 3. If necessary, the salt mixture composition is adjusted to a preferred composition (e.g., a preferred ratio of Na to Ca) that improves or optimizes the hydrolysis reactor operation; this process occurs in the Salt Composition Adjustment block of FIG. 3. The resulting brine stream is heated and the resulting separate phases are fed to a hydrolysis reactor; this process occurs in the Heating and Phase Separation Block of FIG. 3, which could be separate from the hydrolysis reactor as shown, or an integral part of it. In the hydrolysis reactor, CaCl₂ and any other reactive chloride salts undergo hydrolysis to produce phase-segregated streams of HCl vapor and either liquids or solids that contain recoverable hydroxide compounds including Ca(OH)₂. The HCl vapor stream is cooled and fully or partially condensed to produce a product stream of HCl aqueous solution; this process occurs in the HCl Product Condenser block in FIG. 3. The liquid or solid product stream undergoes additional processing to segregate useful materials from the hydrolyzed residues; this process occurs in the Residues Recovery Treatment block in FIG. 3.

### Example 4. Conversion of chloride-dominant salts to carbonate form with HCl conversion.

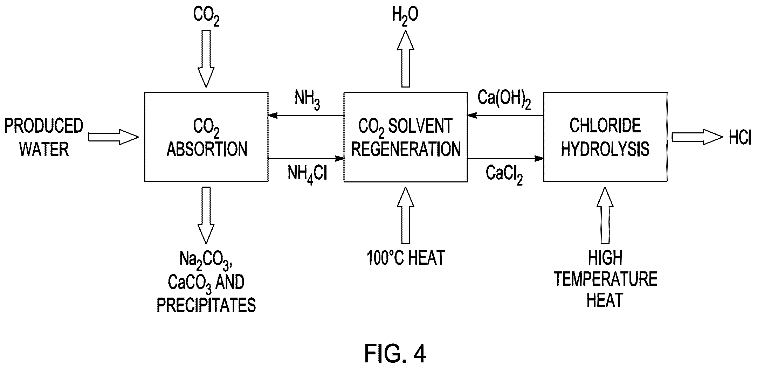

FIG. 4 shows a scheme illustrating conversion of chloride-dominant salts to carbonate form with HCl conversion. Produced water is reacted in a first unit with CO₂ and NH₃, forming metal carbonate salts (e.g., sodium and/or calcium carbonate) and NH₄Cl. The NH₄Cl is flowed to a second unit that reacts Ca(OH)₂ with the NH₄Cl to form CaCl₂ and NH3. The NH₃ is flowed back to the first unit, and the CaCl₂ is flowed to a brine hydrolysis unit that reacts the CaCl₂ with water to form HCl and Ca(OH)₂. The Ca(OH)₂ is flowed back to the second unit. CO₂ Absorption key reactions: NaCl (aq) + 2NH₃ (aq) + CO₂ (g) → NaHCO₃ (s) + 2NH₄Cl (aq); 2NaHCO₃ (s) → Na₂CO₃ (s) + H₂O + CO₂ (g); CaCl₂ (aq) + 2NH₃ + CO₂ (g) → CaCO₃ (s) + 2NH₄Cl (aq). CO₂ Solvent regeneration key reaction: Ca(OH)₂ (aq) + 2NH₄Cl (aq) → CaCl₂ (aq) + 2H₂O + 2NH₃ (g). Chloride hydrolysis key reaction: CaCl₂ + 2H₂O → Ca(OH)₂ + 2HCl.

### Example 5. Desorbed NH₃ from an NH₄Cl solution after mixing with Ca(OH)₂ having various amounts of CaCl₂ therein.

The testing shown in FIG. 5 consisted of filling a bubbling impinger with NH₄Cl solution, mixing in a prescribed quantity of either Ca(OH)₂ or hydrolysis products, and bubbling N₂ gas through the solution to carry away desorbed NH₃. The bubbling impinger was maintained at approximately 80°C during each desorption test. Desorbed NH₃ was quantified during the test by reabsorbing it in a 1 M HCl solution and logging absorber solution pH as neutralization occurred between NH₃ and HCl. The neutralization capacity of each material included in FIG. 5 was previously determined by titration, and the mass added for each material was chosen to maintain a nominal molar ratio of 1.2 times the amount needed for equilibrium reaction stoichiometry. These tests simulated the CO₂ solvent regeneration step in FIG. 1, where mixed hydrolysis products are reacted with NH₄Cl solution to produce NH₃ gas that is desorbed from solution. The results show that the unpurified hydrolysis products were approximately 85% as effective as commercial Ca(OH)₂ at desorbing NH₃, meaning they could be used for solvent regeneration in an unpurified form with acceptable yield.

The terms and expressions that have been employed are used as terms of description and not of limitation, and there is no intention in the use of such terms and expressions of excluding any equivalents of the features shown and described or portions thereof, but it is recognized that various modifications are possible within the scope of the aspects of the present invention. Thus, it should be understood that although the present invention has been specifically disclosed by specific aspects and optional features, modification and variation of the concepts herein disclosed may be resorted to by those of ordinary skill in the art, and that such modifications and variations are considered to be within the scope of aspects of the present invention.

### Exemplary Aspects.

The following exemplary aspects are provided, the numbering of which is not to be construed as designating levels of importance:
Aspect 1 provides a method of hydrolyzing a calcium chloride brine, the method comprising:
   forming ammonia gas comprising reacting NH₄Cl brine with Ca(OH)₂ to form NH₃ and the CaCl₂ brine
   hydrolyzing the CaCl₂ brine comprising reacting the CaCl₂ brine formed during the forming of the ammonia gas with water to form HCl and Ca(OH)₂; and
   recycling at least some of the Ca(OH)₂ formed during the hydrolyzing of the CaCl₂ brine for use as at least part of the Ca(OH)₂ used in the forming of the ammonia gas.
Aspect 2 provides the method of Aspect 1, further comprising recovering the HCl as a product.
Aspect 3 provides the method of any one of Aspects 1-2, wherein the forming of ammonia gas comprises a temperature of room temperature to 200 °C.
Aspect 4 provides the method of any one of Aspects 1-3, wherein the forming of ammonia gas comprises a temperature of 50 °C to 150 °C.
Aspect 5 provides the method of any one of Aspects 1-4, wherein the forming of ammonia gas comprises a pressure of 0.05 MPa to 10 MPa.
Aspect 6 provides the method of any one of Aspects 1-5, wherein the forming of ammonia gas comprises a pressure of 0.1 MPa to 5 MPa.
Aspect 7 provides the method of any one of Aspects 1-6, wherein the hydrolyzing of the CaCl₂ brine comprises a temperature of room temperature to 1000 °C.
Aspect 8 provides the method of any one of Aspects 1-7, wherein the hydrolyzing of the CaCl₂ brine comprises a temperature of 300 °C to 700 °C.
Aspect 9 provides the method of any one of Aspects 1-8, wherein the hydrolyzing of the CaCl₂ brine comprises a temperature of 400 °C to 650 °C.
Aspect 10 provides the method of any one of Aspects 1-9, wherein the hydrolyzing of the CaCl₂ brine comprises a pressure of 0.01 MPa to 100 MPa.
Aspect 11 provides the method of any one of Aspects 1-10, wherein the hydrolyzing of the CaCl₂ brine comprises a pressure of 0.05 MPa to 10 MPa.
Aspect 12 provides the method of any one of Aspects 1-11, wherein the hydrolyzing of the CaCl₂ brine comprises a pressure of 0.1 MPa to 5 MPa.
Aspect 13 provides the method of any one of Aspects 1-12, comprising performing the hydrolyzing of the CaCl₂ brine for a duration of 0.1 second to 5 h.
Aspect 14 provides the method of any one of Aspects 1-13, comprising performing the hydrolyzing of the CaCl₂ brine for a duration of 1 second to 1 h.
Aspect 15 provides the method of any one of Aspects 1-14, comprising performing the hydrolyzing of the CaCl₂ brine for a duration of 1 minute to 1 h.
Aspect 16 provides the method of any one of Aspects 1-15, wherein 0.01 wt% to 100 wt% of the Ca(OH)₂ formed is recycled.
Aspect 17 provides the method of any one of Aspects 1-16, wherein 80 wt% to 100 wt% of the Ca(OH)₂ formed is recycled.
Aspect 18 provides the method of any one of Aspects 1-17, wherein 0.01 wt% to 100 wt% of the Ca(OH)₂ used in the formation of the ammonia is recycled Ca(OH)₂.
Aspect 19 provides the method of any one of Aspects 1-18, wherein 80 wt% to 100 wt% of the Ca(OH)₂ used in the formation of the ammonia is recycled Ca(OH)₂.
Aspect 20 provides the method of any one of Aspects 1-19, wherein the recycling of the Ca(OH)₂ formed during the hydrolyzing of the CaCl₂ brine comprises flowing a recycle stream comprising the Ca(OH)₂ from the hydrolysis of the CaCl₂ to the formation of the ammonia gas.
Aspect 21 provides the method of Aspect 20, wherein the method further comprises at least partially purging materials from the recycle stream prior to flowing the recycle stream to the formation of the ammonia gas.
Aspect 22 provides the method of any one of Aspects 20-21, wherein the materials purged from the recycle stream comprise one or more Mg salts, one or more Li salts, or a combination thereof.
Aspect 23 provides the method of any one of Aspects 20-22, wherein the materials purged from the recycle stream comprise LiCl and/or MgO, and optionally further comprise Ca(OH)₂ and/or CaCl₂.
Aspect 24 provides the method of any one of Aspects 20-23, wherein the purging comprises separating a purge stream from the recycle stream, and separating water-soluble compounds in the purge stream comprising Ca(OH)₂ and MgO from water insoluble compounds in the purge stream comprising LiCl and optionally further comprising CaCl₂.
Aspect 25 provides the method of Aspect 24, further comprising separating the Ca(OH)₂ and the MgO from one another.
Aspect 26 provides the method of Aspect 25, further comprising adding the separated Ca(OH)₂ back to the recycle stream.
Aspect 27 provides the method of any one of Aspects 24-26, wherein the water insoluble compounds comprise CaCl₂, the method further comprising separating the CaCl₂ and the LiCl from one another.
Aspect 28 provides the method of Aspect 27, further comprising adding the separated CaCl₂ back to the recycle stream.
Aspect 29 provides the method of any one of Aspects 1-28, further comprising purging one or more materials from the CaCl₂ brine prior to the hydrolysis of the CaCl₂ brine, the one or more materials comprising one or more Mg salts, one or more Li salts, or a combination thereof.
Aspect 30 provides the method of Aspect 29, wherein the method further comprises at least partially purging materials from the CaCl₂ brine prior to flowing the CaCl₂ brine to the CaCl₂ hydrolysis.
Aspect 31 provides the method of Aspect 30, wherein the materials purged from the CaCl₂ brine comprise one or more Mg salts, one or more Li salts, or a combination thereof.
Aspect 32 provides the method of any one of Aspects 30-31, wherein the materials purged from the CaCl₂ brine comprise LiCl and/or MgO, and optionally further comprise Ca(OH)₂ and/or CaCl₂.
Aspect 33 provides the method of any one of Aspects 29-32, wherein the purging comprises separating a purge stream from the CaCl₂ brine, and separating water-soluble compounds in the purge stream comprising MgO and optionally further comprising Ca(OH)₂ from water insoluble compounds in the purge stream comprising LiCl and CaCl₂.
Aspect 34 provides the method of Aspect 33, wherein the water soluble compounds comprise Ca(OH)₂, further comprising separating the Ca(OH)₂ and the MgO from one another.
Aspect 35 provides the method of Aspect 34, further comprising adding the separated Ca(OH)₂ back to the CaCl₂ brine.
Aspect 36 provides the method of any one of Aspects 33-35, wherein the water insoluble compounds comprise CaCl₂, the method further comprising separating the CaCl₂ and the LiCl from one another.
Aspect 37 provides the method of Aspect 36, further comprising adding the separated CaCl₂ back to the CaCl₂ brine.
Aspect 38 provides the method of any one of Aspects 1-37, wherein products of the hydrolysis of the CaCl₂ brine comprise the HCl, the Ca(OH)₂, and unreacted CaCl₂.
Aspect 39 provides the method of Aspect 38, wherein the products of the hydrolysis of the CaCl₂ brine have a ratio of Ca(OH)₂ to CaCl₂ of 1000:1 to 0.1:1.
Aspect 40 provides the method of any one of Aspects 38-39, wherein the products of the hydrolysis of the CaCl₂ brine have a ratio of Ca(OH)₂ to CaCl₂ of 1:20 to 1000:1.
Aspect 41 provides the method of any one of Aspects 38-40, wherein the hydrolysis of the CaCl₂ brine is not performed to completion, wherein the unreacted CaCl₂ product is CaCl₂ starting material for the hydrolysis.
Aspect 42 provides the method of any one of Aspects 38-41, wherein recycling the Ca(OH)₂ formed during the hydrolyzing of the CaCl₂ brine comprises recycling a mixture of the Ca(OH)₂ formed during the hydrolyzing of the CaCl₂ brine and the unhydrolyzed CaCl₂ from the hydrolysis of the CaCl₂ brine.
Aspect 43 provides the method of any one of Aspects 38-42, wherein reacting the NH₄Cl brine with Ca(OH)₂ comprises reacting the NH₄Cl brine with a mixture of the Ca(OH)₂ formed during the hydrolyzing of the CaCl₂ brine and the unhydrolyzed CaCl₂ from the hydrolysis of the CaCl₂ brine.
Aspect 44 provides the method of any one of Aspects 1-43, further comprising at least partially evaporating water from the CaCl₂ brine prior to the hydrolysis of the CaCl₂ brine.
Aspect 45 provides the method of Aspect 44, wherein the at least partial evaporation of water comprises a temperature of 100 °C to 300 °C.
Aspect 46 provides the method of any one of Aspects 44-45, wherein the at least partial evaporation of water comprises 125 °C to 200 °C.
Aspect 47 provides the method of any one of Aspects 44-46, wherein the at least partial evaporation of water comprises a pressure of 0.001 MPa to 1 MPa.
Aspect 48 provides the method of any one of Aspects 44-47, wherein the at least partial evaporation of water comprises a pressure of 0.01 MPa to 0.2 MPa.
Aspect 49 provides the method of any one of Aspects 44-48, further comprising recycling at least some of the evaporated water for use as at least some of the water used during the hydrolyzing of the CaCl₂ brine.
Aspect 50 provides the method of Aspect 49, wherein 1 wt% to 100 wt% of the evaporated water is recycled.
Aspect 51 provides the method of Aspect 49-50, wherein 80 wt% to 100 wt% of the evaporated water is recycled.
Aspect 52 provides the method of any one of Aspects 1-51, further comprising:
   softening a brine composition, the softening comprising treating the brine composition with NaHCO₃ to form a softened brine composition and one or more softening precipitates, wherein the softened brine composition comprises NaCl; and
   absorbing CO₂ into the softened brine composition, the absorbing CO₂ comprising treating the softened brine composition with CO₂ gas and the NH₃ to form a composition comprising the NH₄Cl brine and NaHCO₃.
Aspect 53 provides the method of Aspect 52, wherein the brine composition comprises produced water from petroleum extraction, produced water from CO₂ sequestration, water produced from an industrial process, a concentrate thereof, a brine formed from reaction of a hydroxide salt with an ammonium chloride salt wherein the ammonium chloride salt is formed by reaction of a starting material brine with CO₂ and ammonia, or a combination thereof.
Aspect 54 provides the method of any one of Aspects 52-53, wherein the method further comprises concentrating a starting material brine to form the brine composition, wherein the starting material brine comprises produced water from petroleum extraction, produced water from CO₂ sequestration, water produced from an industrial process, or a combination thereof.
Aspect 55 provides the method of Aspect 54, wherein the concentrating comprises evaporating, wherein performing the evaporating comprises using thermal treatment, distillation, an evaporator, a rotary evaporator, a jacketed tank evaporator, a natural or forced recirculation evaporator, a falling film evaporator, a rising film evaporator, a climbing and falling-film plate evaporator, a vacuum evaporator, or a combination thereof.
Aspect 56 provides the method of any one of Aspects 52-55, wherein the brine composition comprises a chloride salt of beryllium, magnesium, calcium, strontium, barium, radium, lithium, sodium, potassium, rubidium, cesium, francium, a rare-earth element (REE) (e.g., La, Ce, Pr, Nd, Pm, Sm, Eu, Gd, Tb, Dy, Ho, Er, Tm, Yb, Lu, yttrium, or scandium), or any combination thereof.
Aspect 57 provides the method of any one of Aspects 52-56, wherein the brine composition comprises beryllium chloride, magnesium chloride, calcium chloride, strontium chloride, barium chloride, radium chloride, lithium chloride, sodium chloride, potassium chloride, rubidium chloride, cesium chloride, francium chloride, or a combination thereof.
Aspect 58 provides the method of any one of Aspects 52-57, wherein the brine composition comprises calcium chloride, sodium chloride, magnesium chloride, lithium chloride, a chloride salt of a rare-earth element (REE), or a combination thereof.
Aspect 59 provides the method of any one of Aspects 52-58, wherein the brine composition has a total concentration of metal chloride salts therein of 1 wt% to 50 wt%.
Aspect 60 provides the method of any one of Aspects 52-59, wherein the brine composition has a molar ratio of sodium chloride salt to calcium chloride salt of 0.01:1 to 1000:1.
Aspect 61 provides the method of any one of Aspects 52-60, wherein the brine composition has a ratio of sodium chloride to calcium chloride of 0.01:1 to 1000:1.
Aspect 62 provides the method of any one of Aspects 52-61, wherein the brine composition has a ratio of sodium chloride to calcium chloride of 5:1 to 50:1.
Aspect 63 provides the method of any one of Aspects 52-62, wherein the brine composition is 50 wt% to 99 wt% water.
Aspect 64 provides the method of any one of Aspects 52-63, wherein the softening of the brine composition comprises 10 °C to 150 °C.
Aspect 65 provides the method of any one of Aspects 52-64, wherein the softening of the brine composition comprises 20 °C to 60 °C.
Aspect 66 provides the method of any one of Aspects 52-65, wherein the softening of the brine composition comprises 0.1 MPa to 0.5 MPa.
Aspect 67 provides the method of any one of Aspects 52-66, wherein the softening of the brine composition comprises 0.1 MPa to 0.2 MPa.
Aspect 68 provides the method of any one of Aspects 52-67, wherein the absorbing CO₂ into the softened brine composition comprises a temperature of room temperature to 1000 °C.
Aspect 69 provides the method of any one of Aspects 52-68, wherein the absorbing CO₂ into the softened brine composition comprises a temperature of 10 °C to 700 °C.
Aspect 70 provides the method of any one of Aspects 52-69, wherein the absorbing CO₂ into the softened brine composition comprises a temperature of 450 °C to 550 °C.
Aspect 71 provides the method of any one of Aspects 52-70, wherein the absorbing CO₂ into the softened brine composition comprises a pressure of 0.01 MPa to 100 MPa.
Aspect 72 provides the method of any one of Aspects 52-71, wherein the absorbing CO₂ into the softened brine composition comprises a pressure of 0.05 MPa to 10 MPa.
Aspect 73 provides the method of any one of Aspects 52-72, wherein the absorbing CO₂ into the softened brine composition comprises a pressure of 0.1 MPa to 0.5 MPa.
Aspect 74 provides the method of any one of Aspects 52-73, comprising performing the absorbing CO₂ into the softened brine composition for a duration of 0.1 second to 5 h.
Aspect 75 provides the method of any one of Aspects 52-74, comprising performing the absorbing CO₂ into the softened brine composition for a duration of 1 second to 1 h.
Aspect 76 provides the method of any one of Aspects 52-75, wherein the one or more softening precipitates comprise CaCO₃.
Aspect 77 provides the method of any one of Aspects 52-76, wherein the one or more softening precipitates comprise a metal carbonate.
Aspect 78 provides the method of any one of Aspects 52-77, wherein the one or more softening precipitates comprise BaCO₃, SrCO₃, or a combination thereof.
Aspect 79 provides the method of any one of Aspects 52-78, further comprising recovering the one or more softening precipitates as a product.
Aspect 80 provides the method of any one of Aspects 52-79, wherein the CO₂ gas is derived from combustion.
Aspect 81 provides the method of any one of Aspects 52-80, further comprising recycling at least some of the NaHCO₃ formed during the CO₂ absorption for use as at least part of the NaHCO₃ used in the softening.
Aspect 82 provides the method of Aspect 81, wherein at least some of the NaHCO₃ formed during the treating of the softened brine composition with the CO₂ gas is not recycled to the softening.
Aspect 83 provides the method of any one of Aspects 81-82, further comprising recovering at least some of the NaHCO₃ formed during the treating of the softened brine composition with the CO₂ gas as a product.
Aspect 84 provides the method of any one of Aspects 81-83, wherein 0.01 wt% to 100 wt% of the NaHCO₃ formed is recycled.
Aspect 85 provides the method of any one of Aspects 81-84, wherein 80 wt% to 100 wt% of the NaHCO₃ formed is recycled.
Aspect 86 provides the method of any one of Aspects 81-85, wherein 0.01 wt% to 100 wt% of the NaHCO₃ used in the softening is recycled.
Aspect 87 provides the method of any one of Aspects 81-86, wherein 80 wt% to 100 wt% of the NaHCO₃ used in the softening is recycled.
Aspect 88 provides a method of hydrolyzing a calcium chloride brine, the method comprising:
   forming ammonia gas comprising reacting NH₄Cl brine with a mixture of Ca(OH)₂ and CaCl₂ to form NH₃ and the CaCl₂ brine;
   hydrolyzing the CaCl₂ brine comprising reacting the CaCl₂ brine formed during the forming of the ammonia gas with water to form HCl, Ca(OH)₂, and unhydrolyzed CaCl₂; and
   recycling at least some of the Ca(OH)₂ and the unhydrolyzed CaCl₂ formed during the hydrolyzing of the CaCl₂ brine for use as at least part of the Ca(OH)₂ used in the forming of the ammonia gas.
Aspect 89 provides a method of hydrolyzing a calcium chloride brine, the method comprising:
   softening a brine composition, the softening comprising treating the brine composition with NaHCO₃ to form a softened brine composition and one or more softening precipitates, wherein the softened brine composition comprises NaCl;
   absorbing CO₂ into the softened brine composition, the absorbing CO₂ comprising treating the NaCl in the softened brine composition with CO₂ gas and NH₃ to form a composition comprising NH₄Cl brine and to form NaHCO₃;
   recycling at least some of the NaHCO₃ formed during treating of the softened brine composition with CO₂ gas for use as at least part of the NaHCO₃ used in the softening;
   forming ammonia gas comprising reacting the NH₄Cl brine formed during the treating of the softened brine composition with CO₂ gas with Ca(OH)₂ to form the NH₃ and to form the CaCl₂ brine;
   hydrolyzing CaCl₂ comprising reacting the CaCl₂ brine formed during the forming of the ammonia gas with water to form HCl and Ca(OH)₂; and
   recycling at least some of the Ca(OH)₂ formed during the hydrolyzing of the CaCl₂ brine for use as at least part of the Ca(OH)₂ used in the forming of the ammonia gas.
Aspect 90 provides the method of any one or any combination of Aspects 1-89 optionally configured such that all elements or options recited are available to use or select from.

One non-limiting embodiment of the present invention will now be described by way of reference to the following clauses in which:
1. A method of hydrolyzing a calcium chloride brine, the method comprising:
   forming ammonia gas comprising reacting NH₄Cl brine with Ca(OH)₂ to form NH₃ and the CaCl₂ brine
   hydrolyzing the CaCl₂ brine comprising reacting the CaCl₂ brine formed during the forming of the ammonia gas with water to form HCl and Ca(OH)₂; and
   recycling at least some of the Ca(OH)₂ formed during the hydrolyzing of the CaCl₂ brine for use as at least part of the Ca(OH)₂ used in the forming of the ammonia gas.
2. The method of clause 1, wherein the forming of ammonia gas comprises maintaining a temperature of room temperature to 200 °C and a pressure of 0.05 MPa to 10 MPa.
3. The method of clause 1, wherein the hydrolyzing of the CaCl₂ brine comprises maintaining a temperature 300 °C to 700 °C and a pressure of 0.01 MPa to 100 MPa.
4. The method of clause 1, wherein 0.01 wt% to 100 wt% of the Ca(OH)₂ formed is recycled, and wherein 0.01 wt% to 100 wt% of the Ca(OH)₂ used in the formation of the ammonia is recycled Ca(OH)₂.
5. The method of clause 1, wherein the recycling of the Ca(OH)₂ formed during the hydrolyzing of the CaCl₂ brine comprises flowing a recycle stream comprising the Ca(OH)₂ from the hydrolysis of the CaCl₂ to the formation of the ammonia gas, wherein the method further comprises at least partially purging materials from the recycle stream prior to flowing the recycle stream to the formation of the ammonia gas, and wherein the materials purged from the recycle stream comprise one or more Mg salts, one or more Li salts, or a combination thereof.
6. The method of clause 1, wherein products of the hydrolysis of the CaCl₂ brine comprise the HCl, the Ca(OH)₂, and unreacted CaCl₂, and wherein the products of the hydrolysis of the CaCl₂ brine have a ratio of Ca(OH)₂ to CaCl₂ of 1000:1 to 0.1:1.
7. The method of clause 6, wherein the hydrolysis of the CaCl₂ brine is not performed to completion, wherein the unreacted CaCl₂ product is CaCl₂ starting material for the hydrolysis, wherein recycling the Ca(OH)₂ formed during the hydrolyzing of the CaCl₂ brine comprises recycling a mixture of the Ca(OH)₂ formed during the hydrolyzing of the CaCl₂ brine and the unhydrolyzed CaCl₂ from the hydrolysis of the CaCl₂ brine, and wherein reacting the NH₄Cl brine with Ca(OH)₂ comprises reacting the NH₄Cl brine with a mixture of the Ca(OH)₂ formed during the hydrolyzing of the CaCl₂ brine and the unhydrolyzed CaCl₂ from the hydrolysis of the CaCl₂ brine.
8. The method of clause 1, further comprising at least partially evaporating water from the CaCl₂ brine prior to the hydrolysis of the CaCl₂ brine, wherein the at least partial evaporation of water comprises maintaining a temperature of 100 °C to 300 °C and maintaining a pressure of 0.001 MPa to 1 MPa.
9. The method of clause 8, further comprising recycling at least some of the evaporated water for use as at least some of the water used during the hydrolyzing of the CaCl₂ brine.
10. The method of clause 1, further comprising:
   softening a brine composition, the softening comprising treating the brine composition with NaHCO₃ to form a softened brine composition and one or more softening precipitates, wherein the softened brine composition comprises NaCl; and
   absorbing CO₂ into the softened brine composition, the absorbing CO₂ comprising treating the softened brine composition with CO₂ gas and the NH₃ to form a composition comprising the NH₄Cl brine and NaHCO₃.
11. The method of clause 10, wherein
   the brine composition comprises produced water from petroleum extraction, produced water from CO₂ sequestration, water produced from an industrial process, a concentrate thereof, a brine formed from reaction of a hydroxide salt with an ammonium chloride salt wherein the ammonium chloride salt is formed by reaction of a starting material brine with CO₂ and ammonia, or a combination thereof, or
   wherein the method further comprises concentrating a starting material brine to form the brine composition, wherein the starting material brine comprises produced water from petroleum extraction, produced water from CO₂ sequestration, water produced from an industrial process, or a combination thereof.
12. The method of clause 10, wherein the brine composition comprises a chloride salt of beryllium, magnesium, calcium, strontium, barium, radium, lithium, sodium, potassium, rubidium, cesium, francium, a rare-earth element (REE) (e.g., La, Ce, Pr, Nd, Pm, Sm, Eu, Gd, Tb, Dy, Ho, Er, Tm, Yb, Lu, yttrium, or scandium), or any combination thereof.
13. The method of clause 10, wherein the brine composition comprises beryllium chloride, magnesium chloride, calcium chloride, strontium chloride, barium chloride, radium chloride, lithium chloride, sodium chloride, potassium chloride, rubidium chloride, cesium chloride, francium chloride, or a combination thereof.
14. The method of clause 10, wherein the softening of the brine composition comprises maintaining a temperature of 10 °C to 150 °C and maintaining a pressure of 0.1 MPa to 0.5 MPa.
15. The method of clause 10, wherein the absorbing CO₂ into the softened brine composition comprises maintaining a temperature of 10 °C to 700 °C and maintaining a pressure of 0.01 MPa to 100 MPa.
16. The method of clause 10, wherein the one or more softening precipitates comprise CaCO₃ and optionally further comprise BaCO₃, SrCO₃, or a combination thereof.
17. The method of clause 10, further comprising recycling at least some of the NaHCO₃ formed during the CO₂ absorption for use as at least part of the NaHCO₃ used in the softening, wherein 0.01 wt% to 100 wt% of the NaHCO₃ formed is recycled, and wherein 0.01 wt% to 100 wt% of the NaHCO₃ used in the softening is recycled.
18. The method of clause 17, wherein at least some of the NaHCO₃ formed during the treating of the softened brine composition with the CO₂ gas is not recycled to the softening.
19. A method of hydrolyzing a calcium chloride brine, the method comprising:
   forming ammonia gas comprising reacting NH₄Cl brine with a mixture of Ca(OH)₂ and CaCl₂ to form NH₃ and the CaCl₂ brine;
   hydrolyzing the CaCl₂ brine comprising reacting the CaCl₂ brine formed during the forming of the ammonia gas with water to form HCl, Ca(OH)₂, and unhydrolyzed CaCl₂; and
   recycling at least some of the Ca(OH)₂ and the unhydrolyzed CaCl₂ formed during the hydrolyzing of the CaCl₂ brine for use as at least part of the Ca(OH)₂ used in the forming of the ammonia gas.
20. A method of hydrolyzing a calcium chloride brine, the method comprising:
   softening a brine composition, the softening comprising treating the brine composition with NaHCO₃ to form a softened brine composition and one or more softening precipitates, wherein the softened brine composition comprises NaCl;
   absorbing CO₂ into the softened brine composition, the absorbing CO₂ comprising treating the NaCl in the softened brine composition with CO₂ gas and NH₃ to form a composition comprising NH₄Cl brine and to form NaHCO₃;
   recycling at least some of the NaHCO₃ formed during treating of the softened brine composition with CO₂ gas for use as at least part of the NaHCO₃ used in the softening;
   forming ammonia gas comprising reacting the NH₄Cl brine formed during the treating of the softened brine composition with CO₂ gas with Ca(OH)₂ to form the NH₃ and to form the CaCl₂ brine;
   hydrolyzing CaCl₂ comprising reacting the CaCl₂ brine formed during the forming of the ammonia gas with water to form HCl and Ca(OH)₂; and
   recycling at least some of the Ca(OH)₂ formed during the hydrolyzing of the CaCl₂ brine for use as at least part of the Ca(OH)₂ used in the forming of the ammonia gas.

## Claims

1. A method of hydrolyzing a calcium chloride brine, the method comprising:
forming ammonia gas comprising reacting NH₄Cl brine with Ca(OH)₂ to form NH₃ and the CaCl₂ brine;
hydrolyzing the CaCl₂ brine comprising reacting the CaCl₂ brine formed during the forming of the ammonia gas with water to form HCl and Ca(OH)₂; and
recycling at least some of the Ca(OH)₂ formed during the hydrolyzing of the CaCl₂ brine for use as at least part of the Ca(OH)₂ used in the forming of the ammonia gas.

2. The method of claim 1, wherein the forming of ammonia gas comprises maintaining a temperature of room temperature to 200 °C and a pressure of 0.05 MPa to 10 MPa.

3. The method of claim 1, wherein the hydrolyzing of the CaCl₂ brine comprises maintaining a temperature 300 °C to 700 °C and a pressure of 0.01 MPa to 100 MPa.

4. The method of claim 1, wherein 0.01 wt% to 100 wt% of the Ca(OH)₂ formed is recycled, and wherein 0.01 wt% to 100 wt% of the Ca(OH)₂ used in the formation of the ammonia is recycled Ca(OH)₂.

5. The method of claim 1, wherein the recycling of the Ca(OH)₂ formed during the hydrolyzing of the CaCl₂ brine comprises flowing a recycle stream comprising the Ca(OH)₂ from the hydrolysis of the CaCl₂ to the formation of the ammonia gas, wherein the method further comprises at least partially purging materials from the recycle stream prior to flowing the recycle stream to the formation of the ammonia gas, and wherein the materials purged from the recycle stream comprise one or more Mg salts, one or more Li salts, or a combination thereof.

6. The method of claim 1, wherein products of the hydrolysis of the CaCl₂ brine comprise the HCl, the Ca(OH)₂, and unreacted CaCl₂, and wherein the products of the hydrolysis of the CaCl₂ brine have a ratio of Ca(OH)₂ to CaCl₂ of 1000:1 to 0.1:1.

7. The method of claim 6, wherein the hydrolysis of the CaCl₂ brine is not performed to completion, wherein recycling the Ca(OH)₂ formed during the hydrolyzing of the CaCl₂ brine comprises recycling a mixture of the Ca(OH)₂ formed during the hydrolyzing of the CaCl₂ brine and the unhydrolyzed CaCl₂ from the hydrolysis of the CaCl₂ brine, and wherein reacting the NH₄Cl brine with Ca(OH)₂ comprises reacting the NH₄Cl brine with a mixture of the Ca(OH)₂ formed during the hydrolyzing of the CaCl₂ brine and the unhydrolyzed CaCl₂ from the hydrolysis of the CaCl₂ brine.

8. The method of claim 1, further comprising at least partially evaporating water from the CaCl₂ brine prior to the hydrolysis of the CaCl₂ brine, wherein the at least partial evaporation of water comprises maintaining a temperature of 100 °C to 300 °C and maintaining a pressure of 0.001 MPa to 1 MPa.

9. The method of claim 8, further comprising recycling at least some of the evaporated water for use as at least some of the water used during the hydrolyzing of the CaCl₂ brine.

10. The method of claim 1, further comprising:
softening a brine composition, the softening comprising treating the brine composition with NaHCO₃ to form a softened brine composition and one or more softening precipitates, wherein the softened brine composition comprises NaCl; and
absorbing CO₂ into the softened brine composition, the absorbing CO₂ comprising treating the softened brine composition with CO₂ gas and the NH₃ to form a composition comprising the NH₄Cl brine and NaHCO₃.

11. The method of claim 10, wherein
the brine composition comprises produced water from petroleum extraction, produced water from CO₂ sequestration, water produced from an industrial process, a concentrate thereof, a brine formed from reaction of a hydroxide salt with an ammonium chloride salt wherein the ammonium chloride salt is formed by reaction of a starting material brine with CO₂ and ammonia, or a combination thereof, or
wherein the method further comprises concentrating a starting material brine to form the brine composition, wherein the starting material brine comprises produced water from petroleum extraction, produced water from CO₂ sequestration, water produced from an industrial process, or a combination thereof.

12. The method of claim 10, wherein the softening of the brine composition comprises maintaining a temperature of 10 °C to 150 °C and maintaining a pressure of 0.1 MPa to 0.5 MPa.

13. The method of claim 10, wherein the absorbing CO₂ into the softened brine composition comprises maintaining a temperature of 10 °C to 700 °C and maintaining a pressure of 0.01 MPa to 100 MPa.

14. The method of claim 10, further comprising recycling at least some of the NaHCO₃ formed during the CO₂ absorption for use as at least part of the NaHCO₃ used in the softening, wherein 0.01 wt% to 100 wt% of the NaHCO₃ formed is recycled, and wherein 0.01 wt% to 100 wt% of the NaHCO₃ used in the softening is recycled.

15. The method of claim 14, wherein at least some of the NaHCO₃ formed during the treating of the softened brine composition with the CO₂ gas is not recycled to the softening.
